(19)

**Europäisches Patentamt**
**European Patent Office**
**Office européen des brevets**

(11) **EP 3 751 857 A1**

(12) **EUROPEAN PATENT APPLICATION**

(43) Date of publication:
**16.12.2020 Bulletin 2020/51**

(51) Int Cl.:
***H04N 19/597*** (2014.01) ***H04N 19/70*** (2014.01)

(21) Application number: **20175117.9**

(22) Date of filing: **18.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019 FI 20195518**

(71) Applicant: **Nokia Technologies Oy**
**02610 Espoo (FI)**

(72) Inventors:
• **AFLAKI BENI, Payman**
**33710 Tampere (FI)**
• **SCHWARZ, Sebastian**
**82008 Unterhaching (DE)**

(74) Representative: **Nokia EPO representatives**
**Nokia Technologies Oy**
**Karakaari 7**
**02610 Espoo (FI)**

(54) **A METHOD, AN APPARATUS AND A COMPUTER PROGRAM PRODUCT FOR VOLUMETRIC VIDEO ENCODING AND DECODING**

(57) The present embodiments relate to a method for encoding, comprising receiving a video presentation frame, where the video presentation represents a three-dimensional data; generating one or more patches from the video presentation frame, wherein the patches represent different parts of the content of the video presentation frame; determining which patch(es) of the generated one or more patches are encoded at least partly independently; encoding into a bitstream of a corresponding patch, being determined to be encoded at least partly independently, information on an independency of the patch. The present embodiments also relate to a method for decoding, and apparatuses for implementing the methods.

EP 3 751 857 A1

**Description**

<u>Technical Field</u>

The present solution generally relates to volumetric video coding. In particular, the solution relates to point cloud compression.

<u>Background</u>

Since the beginning of photography and cinematography, the most common type of image and video content has been captured by cameras with relatively narrow field of view, and displayed as a rectangular scene on flat displays. The cameras are mainly directional, whereby they capture only a limited angular field of view (the field of view towards which they are directed).

More recently, new image and video capture devices are available. These devices are able to capture visual and audio content all around them, i.e. they can capture the whole angular field of view, sometimes referred to as 360 degrees field of view. More precisely, they can capture a spherical field of view (i.e., 360 degrees in all spatial directions). Furthermore, new types of output technologies have been invented and produced, such as head-mounted displays. These devices allow a person to see visual content all around him/her, giving a feeling of being "immersed" into the scene captured by the 360 degrees camera. The new capture and display paradigm, where the field of view is spherical, is commonly referred to as virtual reality (VR) and is believed to be the common way people will experience media content in the future.

For volumetric video, a scene may be captured using one or more 3D (three-dimensional) cameras. The cameras are in different positions and orientations within a scene. One issue to consider is that compared to 2D (two-dimensional) video content, volumetric 3D video content has much more data, so viewing it requires lots of bandwidth (with or without transferring it from a storage location to a viewing device): disk I/O, network traffic, memory bandwidth, GPU (Graphics Processing Unit) upload. Capturing volumetric content also produces a lot of data, particularly when there are multiple capture devices used in parallel.

<u>Summary</u>

Now there has been invented an improved method and technical equipment implementing the method, for providing an improvement for volumetric video coding. Various aspects include a method, an apparatus, and a computer readable medium comprising a computer program stored therein, which are characterized by what is stated in the independent claims. Various embodiments are disclosed in the dependent claims.

According to a first aspect, there is provided a method comprising receiving a video presentation frame, where the video presentation represents a three-dimensional data; generating one or more patches from the video presentation frame, wherein the patches represent different parts of the content of the video presentation frame; determining which patch(es) of the generated one or more patches are encoded at least partly independently; and encoding into a bitstream of a corresponding patch, being determined to be encoded at least partly independently, information on an independency of the patch.

According to a second aspect, there is provided a method for decoding, comprising receiving an encoded bitstream; for each patch of the encoded bitstream:

- decoding from the encoded bitstream information on an independency of a patch;
- decoding from the encoded bitstream the patch according to the information of the independency of the patch;

and generating a video presentation frame from the decoded patch(es), wherein the patches represent different parts of the content of the video presentation frame.

According to a third aspect, there is provided an apparatus for encoding, the apparatus comprising means for receiving a video presentation frame, where the video presentation represents a three-dimensional data; means for generating one or more patches from the video presentation frame, wherein the patches represent different parts of the content of the video presentation frame; means for determining which patch(es) of the generated one or more patches are encoded at least partly independently; and means for encoding into a bitstream of a corresponding patch, being determined to be encoded at least partly independently, information on an independency of the patch.

According to a fourth aspect, there is provided an apparatus for decoding, the apparatus comprising means for receiving an encoded bitstream; for each patch of the encoded bitstream:

- means for decoding from the encoded bitstream information on an independency of a patch;

• means for decoding from the encoded bitstream the patch according to the information of the independency of the patch;

and means for generating a video presentation frame from the decoded patch(es), wherein the patches represent different parts of the content of the video presentation frame.

According to a fifth aspect, there is provided an apparatus comprising at least one processor, and memory including computer program code, the memory and the computer program code configured to, with the at least one processor, cause the apparatus to perform at least the following: receive a video presentation frame, where the video presentation represents a three-dimensional data; generate one or more patches from the video presentation frame, wherein the patches represent different parts of the content of the video presentation frame; determine which patch(es) of the generated one or more patches are encoded at least partly independently; and encode into a bitstream of a corresponding patch, being determined to be encoded at least partly independently, information on an independency of the patch.

According to a sixth aspect, there is provided an apparatus comprising at least one processor, and memory including computer program code, the memory and the computer program code configured to, with the at least one processor, cause the apparatus to perform at least the following: receive an encoded bitstream; for each patch of the encoded bitstream:

• decode from the encoded bitstream information on an independency of a patch;
• decode from the encoded bitstream the patch according to the information of the independency of the patch;

and to generate a video presentation frame from the decoded patch(es), wherein the patches represent different parts of the content of the video presentation frame.

According to a seventh aspect, there is provided a computer program product comprising computer program code configured to, when executed on at least one processor, cause an apparatus or a system to receive a video presentation frame, where the video presentation represents a three-dimensional data; generate one or more patches from the video presentation frame, wherein the patches represent different parts of the content of the video presentation frame; determine which patch(es) of the generated one or more patches are encoded at least partly independently; and encode into a bitstream of a corresponding patch, being determined to be encoded at least partly independently, information on an independency of the patch.

According to an eighth aspect, there is provided a computer program product comprising computer program code configured to, when executed on at least one processor, cause an apparatus or a system to receive an encoded bitstream; for each patch of the encoded bitstream:

• decode from the encoded bitstream information on an independency of a patch;
• decode from the encoded bitstream the patch according to the information of the independency of the patch;

and to generate a video presentation frame from the decoded patch(es), wherein the patches represent different parts of the content of the video presentation frame.

According to an embodiment, the information on an independency of the patch comprises information on the type of the independency.

According to an embodiment, the type of the independency is one or both of the following: spatial independency, temporal independency.

According to an embodiment, the information on an independency comprises information on the independency group the patch belongs to.

Description of the Drawings

In the following, various embodiments will be described in more detail with reference to the appended drawings, in which

Fig. 1    shows an example of a compression process;

Fig. 2    shows an example of a layer projection structure;

Fig. 3    shows an example of decompression process;

Fig. 4    is a flowchart illustrating a method according to an embodiment;

Fig. 5    is a flowchart illustrating a method according to another embodiment;

Fig. 6    shows a system according to an embodiment;

Fig. 7    shows an encoding process according to an embodiment; and

Fig. 8    shows an decoding process according to an embodiment.

Description of Example Embodiments

In the following, several embodiments will be described in the context of digital volumetric video. In particular, the several embodiments enable encoding and decoding of digital volumetric video material. The present embodiments are applicable e.g. in the MPEG Video-Based Point Cloud Compression (V-PCC).

Volumetric video may be captured using one or more three-dimensional (3D) cameras. When multiple cameras are in use, the captured footage is synchronized so that the cameras provide different viewpoints to the same world. In contrast to traditional two-dimensional/tree-dimensional (2D/3D) video, volumetric video describes a 3D model of the world where the viewer is free to move and observe different parts of the world.

Volumetric video enables the viewer to move in six degrees of freedom (DOF): in contrast to common 360° video, where the user has from 2 to 3 degrees of freedom (yaw, pitch, and possibly roll), a volumetric video represents a 3D volume of shape rather than a flat image plane. Volumetric video frames contain a large amount of data because they model the contents of a 3D volume instead of just a 2D plane. However, only a relatively small part of the volume changes over time. Therefore, it may be possible to reduce the total amount of data by only coding information about an initial state and changes which may occur between frames. Volumetric video can be rendered from synthetic 3D animations, reconstructed from multi-view video using 3D reconstructing techniques such as structure from motion, or captured with a combination of cameras and depth sensors such as LiDAR, for example.

Volumetric video data represents a three-dimensional scene or object, and can be used as input for augmented reality (AR), virtual reality (VR) and mixed reality (MR) applications. Such data describes geometry (shape, size, position in 3D space) and respective attributes (e.g. color, opacity, reflectance, ...). In addition, the volumetric video data can define any possible temporal changes of the geometry and attributes at given time instances (such as frames in 2D video). Volumetric video can be generated from 3D models, i.e. computer-generated imaginary (CGI), or captured from real-world scenes using a variety of capture solutions, e.g. multi-camera, laser scan, combination of video and dedicated depth sensors, and more. Also, a combination of CGI and real-world data is possible. Examples of representation formats for such volumetric data comprises triangle meshes, point clouds, or voxel. Temporal information about the scene can be included in the form of individual capture instances, i.e. "frames" in 2D video, or other means, e.g. position of an object as a function of time.

Because volumetric video describes a 3D scene (or object), such data can be viewed from any viewpoint. Therefore, volumetric video is an important format for any AR, VR, or MR applications, especially for providing 6DOF viewing capabilities.

Increasing computational resources and advances in 3D data acquisition devices has enabled reconstruction of highly detailed volumetric video representations of natural scenes. Infrared, lasers, time-of-flight and structured light are examples of devices that can be used to construct 3D video data. Representation of the 3D data depends on how the 3D data is used. Dense Voxel arrays have been used to represent volumetric medical data. In 3D graphics, polygonal meshes are extensively used. Point clouds on the other hand are well suited for applications such as capturing real world 3D scenes where the topology is not necessarily a 2D manifold. Another way to represent 3D data is to code the 3D data as a set of texture and depth map as is the case in the multi-view plus depth. Closely related to the techniques used in multi-view plus depth is the use of elevation maps, and multilevel surface maps.

In 3D point clouds, each point of each 3D surface is described as a 3D point with color and/or other attribute information such as surface normal or material reflectance. Point cloud is a set of data points (i.e. locations) in a coordinate system, for example in a three-dimensional coordinate system being defined by X, Y, and Z coordinates. The points may represent an external surface of an object in the screen space, e.g. in a 3D space. A point may be associated with a vector of attributes. A point cloud can be used to reconstruct an object or a scene as a composition of the points. Point clouds can be captured by using multiple cameras and depth sensors. A dynamic point cloud is a sequence of static point clouds, wherein each static point cloud is in its own "point cloud frame".

In dense point clouds or voxel arrays, the reconstructed 3D scene may contain tens or even hundreds of millions of points. If such representation are to be stored or interchanged between entities, then efficient compression is needed. Volumetric video representation formats, such as point clouds, meshes, voxel, does not have a sufficient temporal compression performance. Identifying correspondences for motion-compensation in 3D-space is an ill-defined problem, as both geometry and respective attributes may change. For example, temporal successive point cloud frames do not necessarily have the same number of meshes, points or voxel. Therefore, compression of dynamic 3D scenes is inefficient. Approaches for compressing volumetric data that are based on 2D video, i.e. multiview and depth, have better compression efficiency, but rarely cover the full scene. Therefore, they provide only limited 6DOF capabilities.

Instead of the above-mentioned approach, a 3D scene, represented as meshes, points, and/or voxel, can be projected onto one or more geometries. These geometries can be "unfolded" onto 2D planes (two planes per geometry: one for texture, one for depth), which may then be encoded using standard 2D video compression technologies. Relevant projection geometry information may be transmitted alongside the encoded video files to the decoder. The decoder may decode the video and perform the inverse projection to regenerate the 3D scene in any desired representation format (not necessarily the starting format).

Projecting volumetric models onto 2D planes allows for using standard 2D video coding tools with highly efficient temporal compression. Thus, coding efficiency is increased greatly. Using geometry-projections instead of known 2D-video based approaches, i.e. multiview and depth, provide a better coverage of the scene (or object). Thus, 6DOF capabilities are improved. Using several geometries for individual objects improves the coverage of the scene further. Furthermore, standard video encoding hardware can be utilized for real-time compression/decompression of the projected planes. The projection and reverse projection steps are of low complexity.

An overview of a compression process is shortly discussed next. Such process may be applied for example in V-PCC. At the encoding stage, the input point cloud frame is processed in a following manner: First the volumetric 3D data may be represented as a set of 3D projections in different components. At the separation stage, image is decomposed into far and near components for geometry and corresponding attributes components, in addition an occupancy map 2D image may be created to indicate parts of an image that shall be used. The 2D projection is composed of independent patches based on geometry characteristics of the input point cloud frame. After the patches have been generated and 2D frames for video encoding have been created, the occupancy map, geometry information and the auxiliary information may be compressed. At the end of the process, the separate bitstreams are multiplexed into the output compressed binary file.

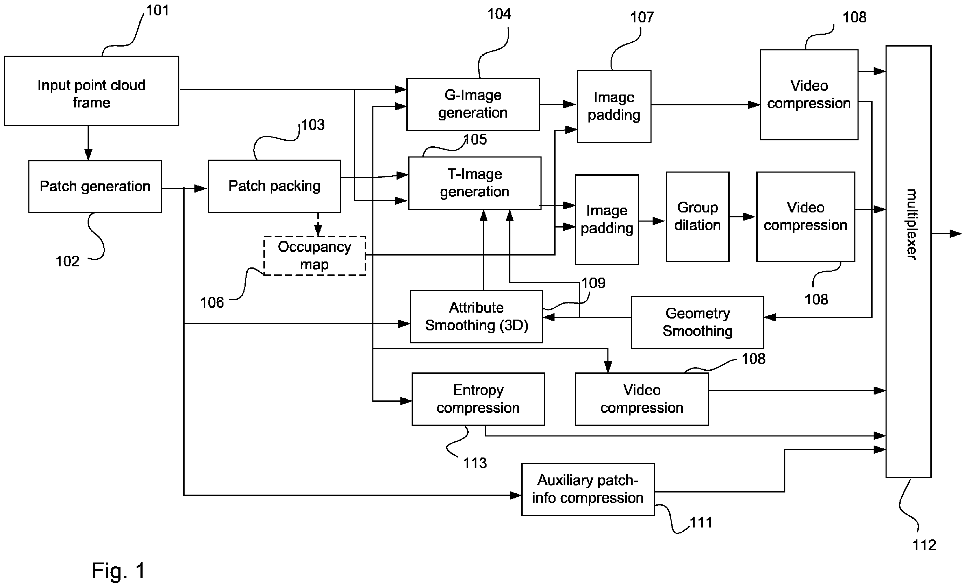

Figure 1 shows the encoding process in more detailed manner.

The process starts with an input frame representing a point cloud frame 101 that is provided for patch generation 102, geometry image generation 104 and texture image generation 105. Each point cloud frame 101 represents a dataset of points within a 3D volumetric space that has unique coordinates and attributes.

The patch generation 102 process decomposes the point cloud frame 101 by converting 3D samples to 2D samples on a given projection plane using a strategy which provides the best compression. According to an example, patch generation 102 process aims at decomposing the point cloud frame 101 into a minimum number of patches with smooth boundaries, while also minimizing the reconstruction error.

At the initial stage of the patch generation 102, a normal per each point is estimated. The tangent plane and its corresponding normal are defined per each point, based on the point's nearest neighbors m within a predefined search distance. A $k$-dimensional tree may be used to separate the data and find neighbors in a vicinity of a point $p_i$ and a barycenter $c = \bar{p}$ of that set of points is used to define the normal. The barycenter c may be computed as follows:

$$c = \bar{p} = \frac{1}{m} \sum_{i=1}^{m} p_i$$

The normal is estimated from eigen decomposition for the defined point cloud as:

$$\sum_{i=1}^{m} (p_i - \bar{p})(p_i - \bar{p})^T$$

Based on this information, each point is associated with a corresponding plane of a point cloud bounding box. Each plane is defined by a corresponding normal $\vec{n}_{pidx}$ with values:

- (1.0, 0.0, 0.0),
- (0.0, 1.0, 0.0),
- (0.0, 0.0, 1.0),
- (-1.0, 0.0, 0.0),
- (0.0, -1.0, 0.0),

- (0.0, 0.0, -1.0)

More precisely, each point may be associated with the plane that has the closest normal (i.e. maximizes the dot product of the point normal $\vec{n}_{p_i}$ and the plane normal $\vec{n}_{p_{idx}}$).

$$\max_{p_{idx}}\left\{\vec{n}_{p_i} \cdot \vec{n}_{p_{idx}}\right\}$$

The sign of the normal is defined depending on the point's position in relationship to the "center".

The initial clustering may then be refined by iteratively updating the cluster index associated with each point based on its normal and the cluster indices of its nearest neighbors. The final step of the patch generation 102 may comprise extracting patches by applying a connected component extraction procedure.

Patch info determined at patch generation 102 for the input point cloud frame 101 is delivered to patch packing 103, to geometry image generation 104, to texture image generation 105, to attribute smoothing (3D) 109 and to auxiliary patch info compression 113. The patch packing 103 aims at generating the geometry and texture maps, by appropriately considering the generated patches and by trying to efficiently place the geometry and texture data that correspond to each patch onto a 2D grid of size WxH. Such placement also accounts for a user-defined minimum size block TxT (e.g. 16x16), which specifies the minimum distance between distinct patches as placed on this 2D grid. Parameter T may be encoded in the bitstream and sent to the decoder.

The packing process 103 may iteratively try to insert patches into a WxH grid. W and H are user defined parameters, which correspond to the resolution of the geometry/texture images that will be encoded. The patch location may be determined through an exhaustive search that may be performed in raster scan order. Initially, patches are placed on a 2D grid in a manner that would guarantee non-overlapping insertion. Samples belonging to a patch (rounded to a value that is a multiple of T) are considered as occupied blocks. In addition, a safeguard between adjacent patches is forced to distance of at least one block being multiple of T. Patches are processed in an orderly manner, based on the patch index list. Each patch from the list is iteratively placed on the grid. The grid resolution depends on the original point cloud size and its width (W) and height (H) are transmitted to the decoder. In the case that there is no empty space available for the next patch the height value of the grid is initially doubled, and the insertion of this patch is evaluated again. If insertion of all patches is successful, then the height is trimmed to the minimum needed value. However, this value is not allowed to be set lower than the originally specified value in the encoder. The final values for W and H correspond to the frame resolution that is used to encode the texture and geometry video signals using the appropriate video codec.

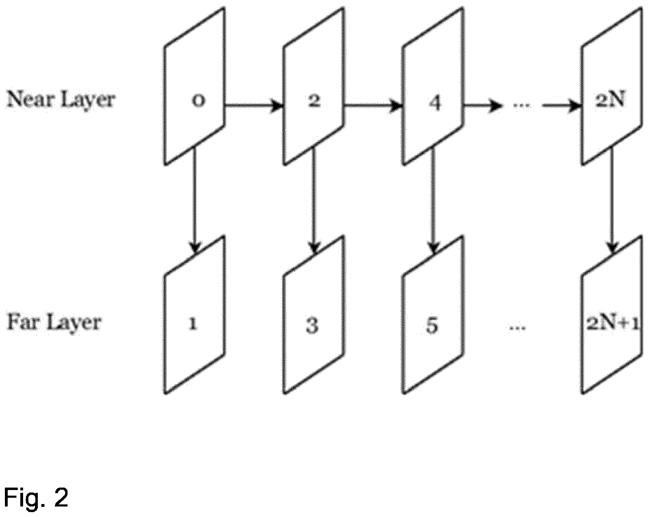

The geometry image generation 104 and the texture image generation 105 are configured to generate geometry images and texture images. The image generation process may exploit the 3D to 2D mapping computed during the packing process to store the geometry and texture of the point cloud as images. In order to better handle the case of multiple points being projected to the same pixel, each patch may be projected onto two images, referred to as layers. For example, let H(u, y) be the set of points of the current patch that get projected to the same pixel (u, v). Figure 2 illustrates an example of layer projection structure. The first layer, also called a near layer, stores the point of H(u, v) with the lowest depth D0. The second layers, referred to as the far layer, captures the point of H(u, v) with the highest depth within the interval [D0, D0+Δ], where Δ is a user-defined parameter that describes the surface thickness. The generated videos may have the following characteristics:

- Geometry: WxH YUV420-8bit,
- Texture: WxH YUV420-8bit,

It is to be noticed that the geometry video is monochromatic. In addition, the texture generation procedure exploits the reconstructed/smoothed geometry in order to compute the colors to be associated with the re-sampled points.

The surface separation method is applied to prevent the mixing of different surfaces in the connected components when there is a stack of multiple different surfaces in that connected component. One of the methods to separate surfaces is to use differences of MSE values of points in RGB color domain:
Patch is separated if

$MSE(R_1 - R_2, G_1 - G_2, B_1 - B_2) > Threshold;$
$Threshold = 20$

where $R_1$, $G_1$, $B_1$ are attribute values belonging to *T0* and $R_2$, $G_2$, $B_2$ are the attribute values belonging to *T1*.

The geometry images (which is monochromatic) and the texture images may be provided to image padding 107. The image padding 107 may also receive as an input an occupancy map (OM) 106 to be used with the geometry images and texture images. The occupancy map 106 may comprise a binary map that indicates for each cell of the grid whether it belongs to the empty space or to the point cloud. In other words, the occupancy map (OM) may be a binary image of binary values where the occupied pixels and non-occupied pixels are distinguished and depicted respectively. The occupancy map may alternatively comprise a non-binary image allowing additional information to be stored in it. Therefore, the representative values of the DOM may comprise binary values or other values, for example integer values. It should be noticed that one cell of the 2D grid may produce a pixel during the image generation process.

The padding process 107 aims at filling the empty space between patches in order to generate a piecewise smooth image suited for video compression. For example, in a simple padding strategy, each block of TxT (e.g. 16x16) pixels is compressed independently. If the block is empty (i.e. unoccupied, i.e. all its pixels belong to empty space), then the pixels of the block are filled by copying either the last row or column of the previous TxT block in raster order. If the block is full (i.e. occupied, i.e., no empty pixels), nothing is done. If the block has both empty and filled pixels (i.e. edge block), then the empty pixels are iteratively filled with the average value of their non-empty neighbors.

The padded geometry images and padded texture images may be provided for video compression 108. The generated images/layers may be stored as video frames and compressed using for example High Efficiency Video Coding (HEVC) Test Model 16 (HM) video codec according to the HM configurations provided as parameters. The video compression 108 also generates reconstructed geometry images to be provided for smoothing 109, wherein a smoothed geometry is determined based on the reconstructed geometry images and patch info from the patch generation 102. The smoothed geometry may be provided to texture image generation 105 to adapt the texture images.

The patch may be associated with auxiliary information being encoded/decoded for each patch as metadata. The auxiliary information may comprise index of the projection plane, 2D bounding box, 3D location of the patch represented in terms of depth $\delta 0$, tangential shift s0 and bitangential shift r0.

The following metadata may be encoded/decoded for every patch:

- Index of the projection plane

  ○ Index 0 for the planes (1.0, 0.0, 0.0) and (-1.0, 0.0, 0.0)
  ○ Index 1 for the planes (0.0, 1.0, 0.0) and (0.0, -1.0, 0.0)
  ○ Index 2 for the planes (0.0, 0.0, 1.0) and (0.0, 0.0, -1.0).

- 2D bounding box (u0, v0, u1, v1)
- 3D location (x0, y0, z0) of the patch represented in terms of depth $\delta 0$, tangential shift s0 and bi-tangential shift r0. According to the chosen projection planes, ($\delta 0$, s0, r0) are computed as follows:

  ○ Index 0, $\delta 0$= x0, s0=z0 and r0 = y0
  ○ Index 1, $\delta 0$= y0, s0=z0 and r0 = x0
  ○ Index 2, $\delta 0$= z0, s0=x0 and r0 = y0

Also, mapping information providing for each TxT block its associated patch index may be encoded as follows:

- For each TxT block, let L be the ordered list of the indexes of the patches such that their 2D bounding box contains that block. The order in the list is the same as the order used to encode the 2D bounding boxes. L is called the list of candidate patches.
- The empty space between patches is considered as a patch and is assigned the special index 0, which is added to the candidate patches list of all the blocks.
- Let I be index of the patch to which belongs the current TxT block and let J be the position of I in L. Instead of explicitly encoding the index I, its position J is arithmetically encoded instead, which leads to better compression efficiency.

The compression process may comprise one or more of the following example operations:

- Binary values may be associated with B0xB0 sub-blocks belonging to the same TxT block. A value 1 associated with a sub-block, if it contains at least a non-padded pixel, and 0 otherwise. If a sub-block has a value of 1 it is said to be full, otherwise it is an empty sub-block.
- If all the sub-blocks of a TxT block are full (i.e., have value 1). The block is said to be full. Otherwise, the block is said to be non-full.
- A binary information may be encoded for each TxT block to indicate whether it is full or not.

- If the block is non-full, an extra information indicating the location of the full/empty sub-blocks may be encoded as follows:

  ◦ Different traversal orders may be defined for the sub-blocks, for example horizontally, vertically, or diagonally starting from top right or top left corner
  ◦ The encoder chooses one of the traversal orders and may explicitly signal its index in the bitstream.
  ◦ The binary values associated with the sub-blocks may be encoded by using a run-length encoding strategy.

    ▪ The binary value of the initial sub-block is encoded.
    ▪ Continuous runs of 0s and 1s are detected, while following the traversal order selected by the encoder.
    ▪ The number of detected runs is encoded.
    ▪ The length of each run, except of the last one, is also encoded.

In occupancy map coding (lossy condition) a two-dimensional binary image of resolution (Width/B0)x(Height/B1), where Width and Height are the width and height of the geometry and texture images that are intended to be compressed. A sample equal to 1 means that the corresponding/co-located sample or samples in the geometry and texture image should be considered as point cloud points when decoding, while a sample equal to 0 should be ignored (commonly includes padding information). The resolution of the occupancy map does not have to be the same as those of the geometry and texture images and instead the occupancy map could be encoded with a precision of B0xB1 blocks. In order to achieve lossless encoding B0 and B1 are selected to be equal to 1. In practice, B0=B1=2 or B0=B1=4 can result in visually acceptable results, while significantly reducing the number of bits required to encode the occupancy map. The generated binary image covers only a single colour plane. However, given the prevalence of 4:2:0 codecs, it may be desirable to extend the image with "neutral" or fixed value chroma planes (e.g. add chroma planes with all sample values equal to 0 or 128, assuming the use of an 8-bit codec).

The obtained video frame may be compressed by using a video codec with lossless coding tool support (e.g., AVC, HEVC RExt, HEVC-SCC).

Occupancy map may be simplified by detecting empty and non-empty blocks of resolution TxT in the occupancy map and only for the non-empty blocks we encode their patch index as follows:

  ◦ A list of candidate patches is created for each TxT block by considering all the patches that contain that block.
  ◦ The list of candidates is sorted in the reverse order of the patches.
  ◦ For each block,

    1. If the list of candidates has one index, then nothing is encoded.
    2. Otherwise, the index of the patch in this list is arithmetically encoded.

A multiplexer 112 may receive a compressed geometry video and a compressed texture video from the video compression 108, and optionally a compressed auxiliary patch information from auxiliary patch-info compression 111. The multiplexer 112 uses the received data to produce a compressed bitstream.

In decoding process of the encoded bitstream the encoded binary file is demultiplexed into geometry, attribute, occupancy map and auxiliary information streams. Auxiliary information stream is entropy coded. Occupancy map may be compressed using entropy coding method, or video compression method depending on selected level. Geometry stream is decoded and in combination with occupancy amp and auxiliary information, smoothing is applied to reconstruct point cloud geometry information. Based on the decoded attribute video stream and reconstructed information for smoothed geometry, occupancy map and auxiliary information the attributes of the point cloud can be reconstructed. After attribute reconstruction stage additional attribute smoothing method is used for point cloud refinement.

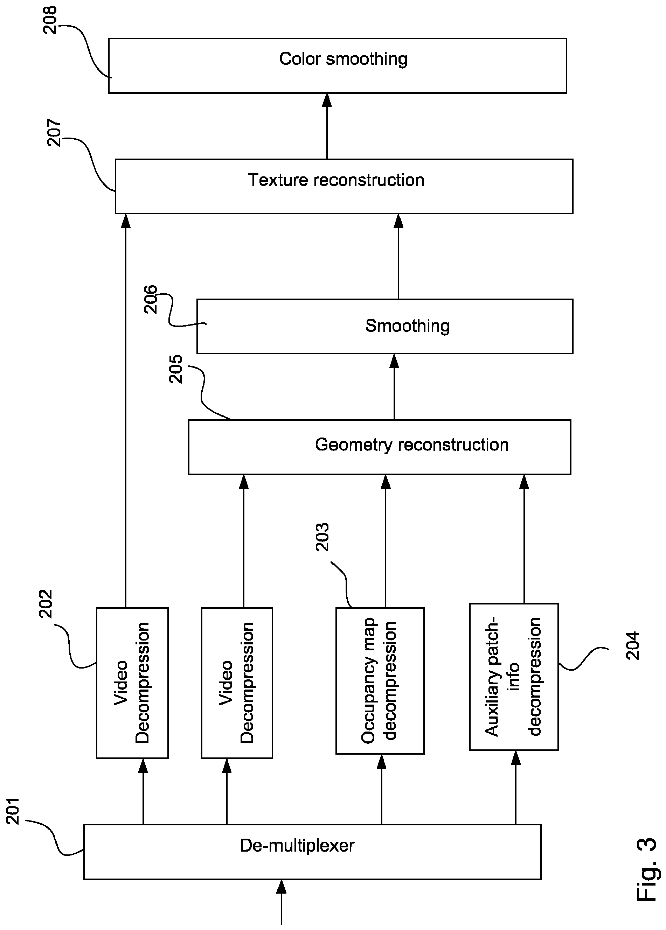

Figure 3 illustrates an overview of a decoding process for MPEG Point Cloud Compression (PCC). A de-multiplexer 201 receives a compressed bitstream, and after de-multiplexing, provides compressed texture video and compressed geometry video to video decompression 202. In addition, the de-multiplexer 201 transmits compressed occupancy map to occupancy map decompression 203. It may also transmit a compressed auxiliary patch information to auxiliary patch-info compression 204. Decompressed geometry video from the video decompression 202 is delivered to geometry reconstruction 205, as are the decompressed occupancy map and decompressed auxiliary patch information.

The point cloud geometry reconstruction 205 process exploits the occupancy map information in order to detect the non-empty pixels in the geometry/texture images/layers. The 3D positions of the points associated with those pixels are computed by levering the auxiliary patch information and the geometry images. More precisely, let P be the point associated with the pixel $(u, v)$ and let $(\delta 0, s0, r0)$ be the 3D location of the patch to which it belongs and $(u0, v0, u1, v1)$ its 2D bounding box. P could be expressed in terms of depth $\delta(u, v)$, tangential shift $s(u, v)$ and bi-tangential shift $r(u, v)$ as follows:

$$\delta(u, v) = \delta 0 + g(u, v)$$

$$s(u, v) = s0 - u0 + u$$

$$r(u, v) = r0 - v0 + v$$

where g(u, v) is the luma component of the geometry image.

The reconstructed geometry image may be provided for smoothing 206, which aims at alleviating potential discontinuities that may arise at the patch boundaries due to compression artifacts. The implemented approach moves boundary points to the centroid of their nearest neighbors. The smoothed geometry may be transmitted to texture reconstruction 207, which also receives a decompressed texture video from video decompression 202. The texture values for the texture reconstruction are directly read from the texture images. The texture reconstruction 207 outputs a reconstructed point cloud for color smoothing 208, which further provides the reconstructed point cloud.

According to V-PCC, the auxiliary information can be signaled in a bitstream according to the following syntax:

Sequence parameter set syntax:

| sequence_parameter_set( ) { | Descriptor |
|---|---|
|     profile_tier_level() | |
|     **sps_sequence_parameter_set_id** | u(4) |
|     **sps_frame_width** | u(16) |
|     **sps_frame_height** | u(16) |
| **...** | |
|     **sps_point_local_reconstruction_enabled_flag** | u(1) |
|     byte_alignment( ) | |
| } | |

Geometry sequence params syntax:

| geometry_sequence_params( ) { | Descriptor |
|---|---|
| **gsp_geometry_smoothing_params_present_flag** | u(1) |
| **gsp_geometry_scale_params_present_flag** | u(1) |
| **gsp_geometry_offset_params_present_flag** | u(1) |
| **gsp_geometry_rotation_params_present_flag** | u(1) |
| **gsp_geometry_point_size_info_present_flag** | u(1) |
| **gsp_geometry_point_shape_info_present_flag** | u(1) |
| if( gsp_geometry_smoothing_params_present_flag ) { | |
| **gsp_geometry_smoothing_enabled_flag** | u(1) |
| if ( gsp_geometry_smoothing_enabled_flag ) { | |
| **gsp_geometry_grid_size** | u(8) |
| **gsp_geometry_smoothing_threshold** | u(8) |
| } | |
| } | |
| if( gsp_geometry_scale_params_present_flag ) | |

| | Descriptor |
|---|---|
| for( d = 0; d < 3; d++ ) | |
| **gsp_geometry_scale_on_axis**[ d ] | u(32) |
| if( gsp_geometry_offset_params_present_flag ) | |
| for( d = 0; d < 3; d++ ) | |
| **gsp_geometry_offset_on_axis**[ d ] | i(32) |
| if( gsp_geometry_rotation_params_present_flag ) | |
| for( d = 0; d < 3; d++ ) | |
| **gsp_geometry_rotation_on_axis**[ d ] | i(32) |
| if( gsp_geometry_point_size_info_present_flag ) | |
| **gsp_geometry_point_size_info** | u(8) |
| if( geometry_point_shape_info_present_flag ) | |
| **gsp_geometry_point_shape_info** | u(8) |
| } | |

Geometry frame params syntax:

| geometry_frame_params( ) { | Descriptor |
|---|---|
| **gfp_geometry_smoothing_params_present_flag** | u(1) |
| **gfp_geometry_scale_params_present_flag** | u(1) |
| **gfp_geometry_offset_params_present_flag** | u(1) |
| **gfp_geometry_rotation_params_present_flag** | u(1) |
| **gfp_geometry_point_size_info_present_flag** | u(1) |
| **gfp_geometry_point_shape_info_present_flag** | u(1) |
| if( gfp_geometry_smoothing_params_present_flag ) { | |
| **gfp_geometry_smoothing_enabled_flag** | u(1) |
| if ( gfp_geometry_smoothing_enabled_flag ) { | |
| **gfp_geometry_smoothing_grid_size** | u(8) |
| **gfp_geometry_smoothing_threshold** | u(8) |
| } | |
| } | |
| if( gfp_geometry_scale_params_present_flag ) | |
| for( d = 0; d < 3; d++ ) | |
| **gfp_geometry_scale_on_axis**[ d ] | u(32) |
| if( gfp_geometry_offset_params_present_flag ) | |

| | |
|---|---|
| for( d = 0; d < 3; d++ ) | |
| **gfp_geometry_offset_on_axis**[ d ] | i(32) |
| if( gfp_geometry_rotation_params_present_flag ) | |
| for( d = 0; d < 3; d++ ) | |
| **gfp_geometry_rotation_on_axis**[ d ] | i(32) |
| if( gfp_geometry_point_size_info_present_flag ) | |
| **gfp_geometry_point_size_info** | u(8) |
| if( gfp_geometry_point_shape_info_present_flag ) | |
| **gfp_geometry_point_shape_info** | u(8) |
| } | |

Geometry patch params syntax:

| geometry_patch_params( ) { | Descriptor |
|---|---|
| if( gfps_geometry_patch_scale_params_enabled_flag ) { | |
| **gpm_geometry_patch_scale_params_present_flag** | u(1) |
| if( gpm_geometry_patch_scale_params_present_flag) | |
| for( d = 0; d < 3; d++ ) | |
| **gpm_geometry_patch_scale_on_axis**[ d ] | u(32) |
| } | |
| if(gfps_geometry_patch_offset_params_enabled_flag ) { | |
| **gpm_geometry_patch_offset_params_present_flag** | u(1) |
| if( gpm_geometry_patch_offset_params_present_flag ) | |
| for( d = 0; d < 3; d++ ) | |
| **gpm_geometry_patch_offset_on_axis**[ d ] | i(32) |
| } | |
| if( gfps_geometry_patch_rotation_params_enabled_flag ) { | |
| **gpm_geometry_patch_rotation_params_present_flag** | u(1) |
| if( gpm_geometry_pach_rotation_params_present_flag ) | |
| for( d = 0; d < 3; d++ ) | |
| **gpm_geometry_patch_rotation_on_axis**[ d ] | i(32) |
| } | |
| if( gfps_geometry_patch_point_size_info_enabled_flag ) { | |

| | |
|---|---|
| **gpm_geometry_patch_point_size_info_present_flag** | u(1) |
| if( gpm_geometry_patch_point_size_info_present_flag ) | |
| **gpm_geometry_patch_point_size_info** | u(16) |
| } | |
| if( gfps_geometry_patch_point_shape_info_enabled_flag ) { | |
| **gpm_geometry_patch_point_shape_info_present_flag** | u(1) |
| if( gpm_geometry_patch_point_shape_info_present_flag ) | |
| **gpm_geometry_patch_point_shape_info** | u(8) |
| } | |
| } | |

One way to compress a time-varying volumetric scene/object is to project 3D surfaces on to some number of pre-defined 2D planes. Regular 2D video compression algorithms can then be used to compress various aspects of the projected surfaces. For example, a time-varying 3D point cloud with spatial and texture coordinates, can be mapped into a sequence of at least two sets of planes, where one of the two sets carry the texture data and the other carries the distance of the mapped 3D surface points from the projection planes. After decoding, a 3D representation is reconstructed by projecting the 2D pixels back into 3D space.

The present embodiments are targeted to Point Cloud Compression (PCC) by reducing the required bitrate to encode a 3D presentation to alleviate the burden of the huge amount of data to be encoded and transmitted.

To generate the PCC content (i.e. point cloud compressed content), the scene is transformed into several patches. In the patch generation (Fig. 1; 102), a volumetric video frame is received as an input. The volumetric video frame is represented as a set of 3D samples, wherein each 3D sample is converted into several 2D samples relating to different projections. In the projection stage, only the content is projected to projection surfaces, and presented in different patches. In patch packing (Fig. 1; 103), a geometry and texture images (Fig. 1; 104, 105) are generated based on the generated patches.

Some of the generated patches have similar content to other patches, and hence, for prediction, information from other patches may be taken into account in encoding. However, in some cases, patch encoding process may have to be done independently or partially independently (e.g. for important patches comprising a region of interest, face, etc. where the content is to be decoded and presented with no dependency on any other patch). This means that some part of the content of the video frame may be encoded independently from other parts of the content. For example, a content producer may define a region of a content to be a region or volume of interest (ROI / VOI), and in that case it may be determined that all patches representing the ROI/VOI in question are to be encoded independently. This determination can be made by the encoder, and communicated to the decoder, so that the decoder knows which patches can be decoded with no dependency.

In a similar manner, the metadata for each patch defined to be decoded independently should be transmitted independently from other patches.

Therefore, the patches that are encoded independently or partially independently, are decodable independently from other patches. Therefore such content is decoded and reconstructed without needing to have any other patch of the scene to be decoded prior to it.

In some situations, the content may need to be presented partially to the end user. For example, a user may zoom to some specific part of the content, or the viewing direction may be towards a specific part of the content. On the other hand, the content producer may have decided to limit the access to the content based on e.g. level of end-user. Sometimes, the bandwidth limitation may limit the user perception to observe the scene partially showing only such part of the scene that is considered important. In this scenario, the parts of the scene which needs to be presented independently to the end user may be encoded by marking respective patches with an independency flag. Therefore, patches which represent the content that is to be presented independently, can be decoded without any requirement on other patches (which are not to be shown to the end user for that application) to be decoded earlier.

Term "independency" can be defined in various ways for the patch encoding/decoding process. These alternatives may include, but are not limited to, the following:

- Temporal independency:
  The decoding process of the current patch may not depend on any of the patches decoded prior to decoding the current patch. This means that none of the patches which were decoded in the previous time stamp can be used as a reference for predicting the current patch.
  It is appreciated that the patches may belong to a later frame (i.e. a frame that is coming temporally after the frame that includes the current patch) but in the decoding process such patch is decoded prior to the current frame. Such temporal independency also exclude such patches that belong to later frames to act as references for prediction of the current patch.

- Spatial independency:
  In spatial independency, temporal referencing is allowed but spatial referencing is not allowed. This is realized by two examples: 1) Dependency is not allowed to patches in the same time stamp. However, dependency to patches in all (same and different) spatial locations in other time stamps is allowed; 2) Spatial dependency is not allowed to patches in the same time stamp. However, dependency to patches in the same spatial location is other time stamps is allowed.
  Spatial independency may also include the padded area between the patches, i.e., the empty areas between two adjacent patches that are not created based on a projection from the scene, but have been created based on the content information of both adjacent patches. Since the padding may utilize the content from both adjacent patches, then the content of padded area cannot be used as reference for prediction of current patch either. Only in the case that the padding is done independently from other/adjacent patch information, the padding content may be used in the prediction (and hence decoding) process of the current patch where spatial independency is set to be true.

- Grouping of temporal independencies
  The decoding process of the current patch may depend on one or more patches decoded prior to decoding of the current patch, but not all of them. This means that some of the patches which were decoded in the previous time stamp can be used as a reference for predicting the current patch.

- Grouping of spatial independencies
  This means the decoding process of the current patch may depend on one or more patches from the same time stamp but in other spatial locations, but not all of them. This means that some of the patches which were decoded in the same time stamp can be used as a reference for predicting the current patch.

- A combination of temporal and spatial independencies without any grouping

- A combination of temporal and spatial independencies with grouping for one or both independencies

When considering a dependency between patches, any of the following may be applied alone or in combination with others:
According to an embodiment, the dependency may consider the content of the patch, e.g. inter-prediction or intra prediction dependencies. For example, motion vectors from current patch may point to a location which is outside of the current patch. If the spatial independency is defined for the current patch, such scenario should be handled by mirroring the content around the edge of the patch (only based on the information of the current patch) or padding the content (only based on the information of the current patch) so that a reference for that patch can be created. Similar spatial or temporal independency concept is applicable in this example too.

According to an embodiment, the dependency may consider the metadata transmitted per patch. Such metadata may depend on other patches' metadata, or the scene may have similar metadata for several patches. If independency in patch metadata is required, then all the metadata needed to decode the current patch may be included in its metadata, and the metadata may not be predicted (or copied) from metadata of any other patch. Similar spatial or temporal independency concept is applicable in this example too.

According to an embodiment, the dependency may consider cross-component and cross-attribute prediction. For example, if some prediction from the geometry picture is used for encoding a texture picture, defined independencies need to be handled accordingly. I.e. an independent texture patch may use only data from the geometry, occupancy or other attribute representation of the same patch.

There may be a syntax element introduced to define at least type of the independency required for the current patch, e.g.:
patch_independency_type=0..2,
where

patch_independency_type = 0 means that the patch is temporally independent from other patches; and
patch_independency_type = 1 means that the patch is spatially independent from other patches; and
patch_independency_type = 2 means that the patch is temporally and spatially independent from other patches.

In one embodiment, the dependencies between the patches may be restricted to a group of patches, meaning that the current patch may only be predicted from a selected number of patches. This may be indicated in the patch metadata or along the bitstream, e.g. as accompanying media description. Such dependency may refer to the cases that the patch content is to be created along with a set of other patches, but should still remain independently decodable without utilizing the content of the rest of the patches (the ones not included in the selected number of patches). In this embodiment, a signaling may define the group of patches where the patches may only depend on each other.

According to an embodiment, different qualities per patches may be considered when defining dependency between patches. For each quality, the dependencies and limitations may differ. For example, for highest quality, the temporal and spatial dependencies may be allowed while for lower quality no dependency may be allowed. It is appreciated that the definition of dependency and independency for higher and lower quality may switch based on the application in which the content is to be presented to the end user.

According to an embodiment, dependencies may be defined in one-directional manner, i.e., if a patch is not using other patches for prediction, other patches may still use this patch for prediction (temporal, spatial, or both predictions). Alternatively, according to another embodiment, dependencies may be defined in two-directional manner, i.e., if a patch is not using other patches for prediction, other patches also cannot use this patch for prediction.

According to an embodiment, depending on the priority of the patches, it may be defined that the patches with higher/highest priority may be encoded as independently decodable patches. This makes sure that these patches can be decoded/reconstructed with no requirement or need of other patches to be decoded/reconstructed prior to them. Similarly, the patches with lower priority may be encoded as dependent patches. It is appreciated that the definition of dependency and independency for higher and lower priority may switch based on the application in which the content is to be presented to the end user.

According to other embodiments, the limitations may be applied only to some patch categories, e.g. geometry or occupancy maps or attributes, such as texture. In such embodiments, depending on the requirements of the application, geometry and occupancy patches may be considered dependent on other patches while texture attribute patches may be encoded independently and signaled to be independent from other texture attribute patches.

An example of possible syntax implementation is presented below, where syntax elements **patch_independency_allowed** and **patch_independency** are introduced according to the present embodiments:

| patch_data_unit( frmIdx, patchIndex ) { | Descriptor |
|---|---|
| **pdu_2d_shift_u**[ frmIdx ][ patchIndex ] | ae(v) |
| **pdu_2d_shift_v**[ frmIdx ][ patchIndex ] | ae(v) |
| **pdu_2d_delta_size_u**[ frmIdx ][ patchIndex ] | ae(v) |
| **pdu_2d_delta_size_v**[ frmIdx ][ patchIndex ] | ae(v) |
| **pdu_3d_shift_tangent_axis**[ frmIdx ][ patchIndex ] | ae(v) |
| **pdu_3d_shift_bitangent_axis**[ frmIdx ][ patchIndex ] | ae(v) |
| **pdu_3d_shift_normal_axis**[ frmIdx ][ patchIndex ] | ae(v) |
| **pdu_normal_axis**[ frmIdx ][ patchIndex ] | ae(v) |
| if( pfh_patch_orientation_present_flag[ frmIdx ] ) | |
| **pdu_orientation_swap_flag**[ frmIdx ][ patchIndex ] | ae(v) |
| if( pfh_lod_bit_count[ frmIdx ] > 0 ) | |
| **pdu_lod**[ frmIdx ][ patchIndex **]** | ae(v) |
| if(patch_independency_allowed==1) | |
| **patch_independency** [ frmIdx ][ patchIndex ] | u(2) |

where the syntax element **patch_independecy** signals the type of independency, e.g. 0 for no independency, 1 for spatial independency, 2 for temporal independency, 3 for temporal and spatial independency.

The following syntax provides a possible implementation for independency grouping:

| patch_data_unit( frmIdx, patchIndex ) { | Descriptor |
|---|---|
| pdu_2d_shift_u[ frmIdx ][ patchIndex ] | ae(v) |
| pdu_2d_shift_v[ frmIdx ][ patchIndex ] | ae(v) |
| pdu_2d_delta_size_u[ frmIdx ][ patchIndex ] | ae(v) |
| pdu_2d_delta_size_v[ frmIdx ][ patchIndex ] | ae(v) |
| pdu_3d_shift_tangent_axis[ frmIdx ][ patchIndex ] | ae(v) |
| pdu_3d_shift_bitangent_axis[ frmIdx ][ patchIndex ] | ae(v) |
| pdu_3d_shift_normal_axis[ frmIdx ][ patchIndex ] | ae(v) |
| pdu_normal_axis[ frmIdx ][ patchIndex ] | ae(v) |
| if( pfh_patch_orientation_present_flag[ frmIdx ] ) | |
| pdu_orientation_swap_flag[ frmIdx ][ patchIndex ] | ae(v) |
| if( pfh_lod_bit_count[ frmIdx ] > 0 ) | |
| pdu_lod[ frmIdx ][ patchIndex ] | ae(v) |
| patch_indpendency_group[ frmIdx ][ patchIndex ] | u(n) |
| if(patch_independency_allowed==1) | |
| patch_independency [ frmIdx ][ patchIndex ] | u(4) |
| patch_independency_group_reference[ frmIdx ][ patchIndex ] | u(n) |

where syntax elements **patch_independency_group,** and **patch_independency** and **patch_independency_group_reference** are introduced according to the present embodiments. **patch_independency_group** signals the independency group the current patch belongs to.

It is appreciated that a patch may belong to a different patch_independency_group than to which it is allowed to refer by itself. For example, a patch may belong to a group 1, but is only allowed to refer to group 2 and group 3. In such case, the patch_independency_group the current patch is allowed to use for prediction can be signaled as syntax element **patch_independency_group_reference.** Thus a patch may belong to a **patch_independency_group** and may refer to another **patch_independency_group** as reference. A patch may also belong to two **patch_independency_groups.** The **patch_independency_groups** may overlap by including same patches in them or may be defined to have no patch overlap.

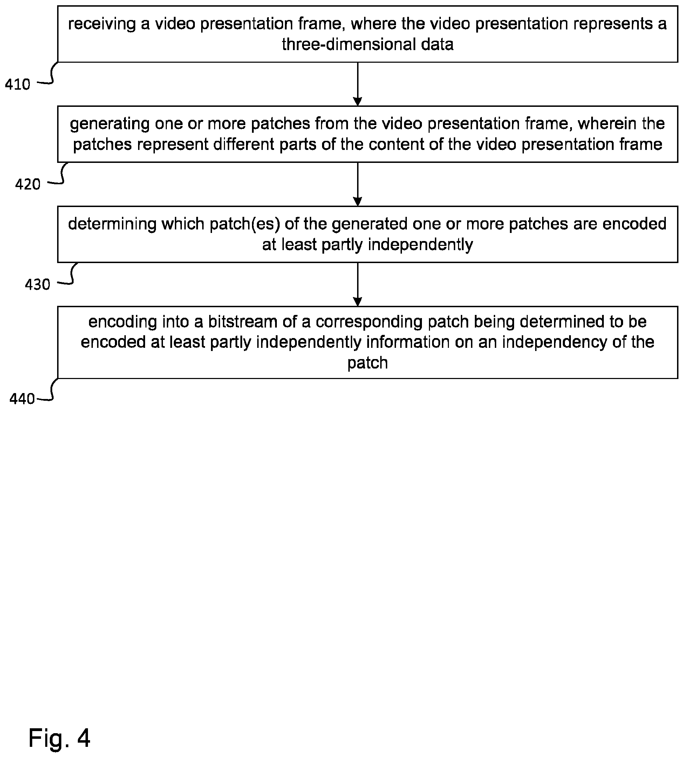

Fig. 4 is a flowchart illustrating a method for encoding according to an embodiment. A method comprises receiving 410 a video presentation frame, where the video presentation represents a three-dimensional data; generating 420 one or more patches from the video presentation frame, wherein the patches represent different parts of the content of the video presentation frame; determining 430 which patch(es) of the generated one or more patches are encoded at least partly independently; encoding 440 into a bitstream of a corresponding patch being determined to be encoded at least partly independently information on an independency of the patch.

The encoded bitstream can be stored for later transmission/decoding. Instead, the encoded bitstream can be transmitted to a decoder for decoding.

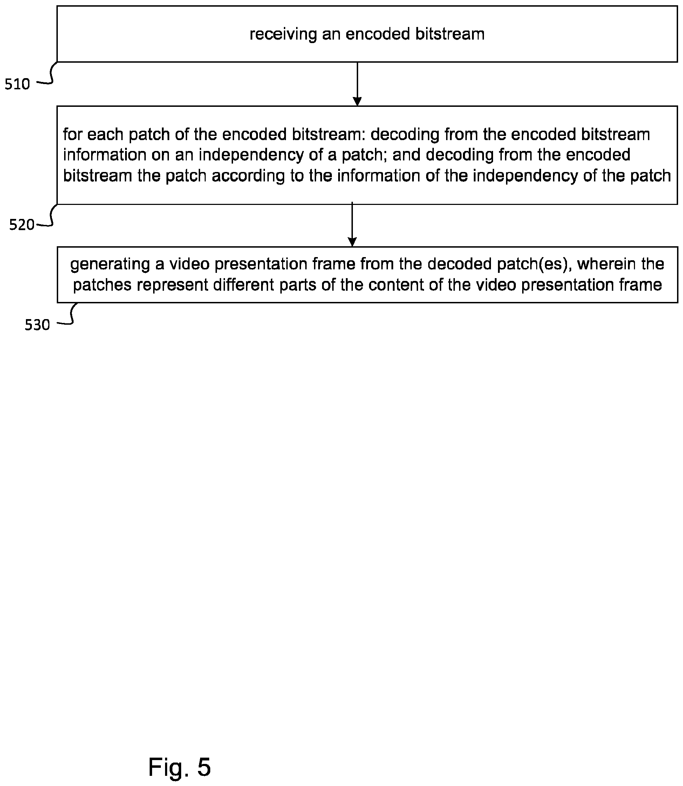

Fig. 5 is a flowchart illustrating a method for decoding according to another embodiment. A method comprises receiving 510 an encoded bitstream; for each patch of the encoded bitstream 520:

- decoding from the encoded bitstream information on an independency of a patch;
- decoding from the encoded bitstream the patch according to the information of the independency of the patch;

and generating 530 a video presentation frame from the decoded patch(es), wherein the patches represent different parts of the content of the video presentation frame.

The three-dimensional data in the above examples can be a point cloud.

An apparatus according to an embodiment comprises at least means for receiving a video presentation frame, where the video presentation represents a three-dimensional data; means for generating one or more patches from the video presentation frame, wherein the patches represent different parts of the content of the video presentation frame; means for determining which patch(es) of the generated one or more patches are encoded at least partly independently; and means for encoding into a bitstream of a corresponding patch, being determined to be encoded at least partly independently, information on an independency of the patch. The means comprises at least one processor, and a memory including a computer program code, wherein the processor may further comprise processor circuitry. The memory and the computer program code are configured to, with the at least one processor, cause the apparatus to perform the method of flowchart in Figure 4 according to various embodiments.

An apparatus according to another embodiment comprises at least means for receiving an encoded bitstream; for each patch of the encoded bitstream:

- means for decoding from the encoded bitstream information on an independency of a patch;
- means for decoding from the encoded bitstream the patch according to the information of the independency of the patch;

means for generating a video presentation frame from the decoded patch(es), wherein the patches represent different parts of the content of the video presentation frame. The means comprises at least one processor, and a memory including a computer program code, wherein the processor may further comprise processor circuitry. The memory and the computer program code are configured to, with the at least one processor, cause the apparatus to perform the method of flowchart in Figure 5 according to various embodiments.

The three-dimensional data in the above examples can be a point cloud.

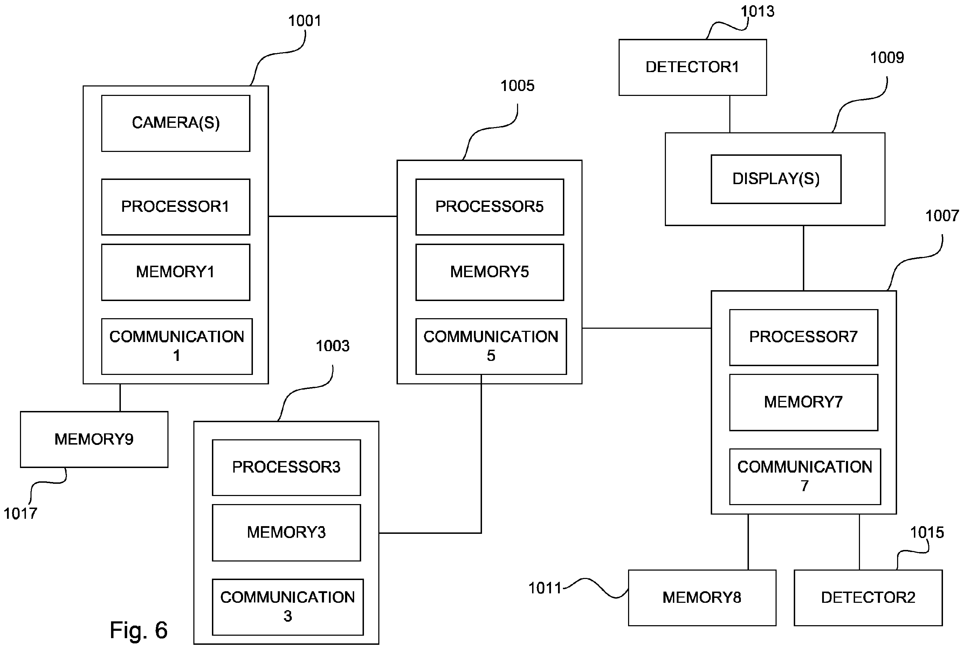

Figure 6 shows a system and apparatuses for viewing volumetric video according to present embodiments. The task of the system is that of capturing sufficient visual and auditory information from a specific location such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of image with disparity, two camera sources are used. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

The system of Figure 6 may comprise three parts: image sources 1001, 1003, a server 1005 and a rendering device 1007. An image source can be a video capture device 1001 comprising two or more cameras with overlapping field of view so that regions of the view around the video capture device is captured from at least two cameras. The video capture device 1001 may comprise multiple microphones (not shown in the figure) to capture the timing and phase differences of audio originating from different directions. The video capture device 1001 may comprise a high-resolution orientation sensor so that the orientation (direction of view) of the plurality of cameras can be detected and recorded The video capture device 1001 comprises or is functionally connected to a computer processor PROCESSOR1 and memory MEMORY1, the memory comprising computer program code for controlling the video capture device 1001. The image stream captured by the video capture device 1001 may be stored on a memory MEMORY1 and/or removable memory MEMORY9 for use in another device, e.g. in a viewer, and/or transmitted to a server 1005 using a communication interface COMMUNICATION1.

Alternatively, or in addition to the video capture device 1001 creating an image stream, or a plurality of such, one or more image source devices 1003 of synthetic images may be present in the system. Such image source devices 1003 of synthetic images may use a computer model of a virtual world to compute the various image streams it transmits. For example, the image source 703 may compute N video streams corresponding to N virtual cameras located at a virtual viewing position. When such a synthetic set of video streams is used for viewing, the viewer may see a three-dimensional virtual world. The image source device 1003 comprises or is functionally connected to a computer processor PROCESSOR3 and memory MEMORY3, the memory comprising computer program code for controlling the image source device 1003. There may be a storage, processing and data stream serving network in addition to the video capture device 1001. For example, there may be a server 1005 or a plurality of servers storing the output from the video capture device 1001 or image source device 1003. The server 705 comprises or is functionally connected to a computer processor PROCESSOR5 and memory MEMORY5, the memory comprising computer program code for controlling the server 1005. The server 1005 may be connected by a wired or wireless network connection, or both, to sources 1001 and/or 1003, as well as the viewer devices 1009 over the communication interface COMMUNICATION5.

For viewing the captured or created video content, there may be one or more viewer devices 1009 (a.k.a. playback devices). These viewer devices 1009 may have one or more displays, and may comprise or be functionally connected to a rendering module 1007. The rendering module 1007 comprises a computer processor PROCESSOR7 and memory MEMORY7, the memory comprising computer program code for controlling the viewer devices 1009. The viewer devices 1009 may comprise a data stream receiver for receiving a video data stream from a server and for decoding the video data stream. The data stream may be received over a network connection through communications interface, or from a memory device 1011 like a memory card. The viewer devices 1009 may have a graphics processing unit for processing of the data to a suitable format for viewing. The viewer device 1009 can be a high-resolution stereo-image head-mounted display for viewing the rendered stereo video sequence. The head-mounted display may have an orientation detector 1013 and stereo audio headphones. According to an embodiment, the viewer device 1009 is a display enabled with 3D technology (for displaying stereo video), and the rendering device 1007 may have a head-orientation detector 1015 connected to it. Alternatively, the viewer device 1009 may comprise a 2D display, since the volumetric video rendering can be done in 2D by rendering the viewpoint from a single eye instead of a stereo eye pair. Any of the devices 1001, 1003, 1005, 1007, 1009 may be a computer or a portable computing device, or be connected to such. Such devices may have computer program code for carrying out methods according to various examples described in this text.

As mentioned, the viewer device can be a head-mounted display (HMD). The head-mounted display comprises two screen sections or two screens for displaying the left and right eye images. The displays are close to the eyes, and therefore lenses are used to make the images easily viewable and for spreading the images to cover as much as possible of the eyes' field of view. The device is attached to the head of the user so that it stays in place even when the user turns his head. The device may have an orientation detecting module for determining the head movements and direction of the head. The head-mounted display gives a three-dimensional (3D) perception of the recorded/streamed content to a user.

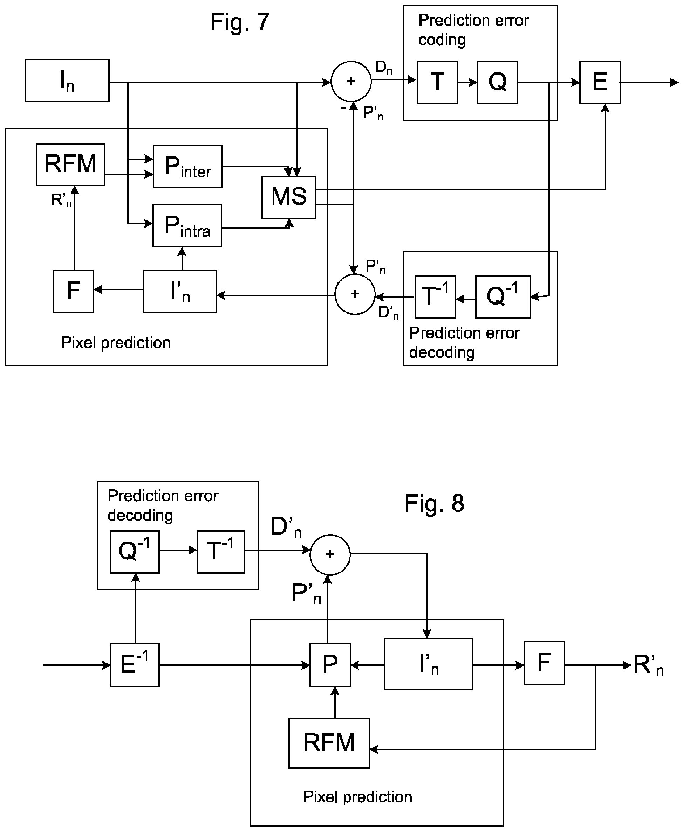

The video material captured or generated by any of the image sources can be provided for an encoder that transforms an input video into a compressed representation suited for storage/transmission. The compressed video is provided for a decoder that can uncompress the compressed video representation back into a viewable form. The encoder may be located in the image sources or in the server. The decoder may be located in the server or in the viewer, such as a HMD. The encoder may discard some information in the original video sequence in order to represent the video in a more compact form (that is, at lower bitrate). An example of an encoding process is illustrated in Figure 7. Figure 7 illustrates an image to be encoded ($I^n$); a predicted representation of an image block ($P'^n$); a prediction error signal ($D^n$); a reconstructed prediction error signal ($D'^n$); a preliminary reconstructed image ($I'^n$); a final reconstructed image ($R'^n$); a transform (T) and inverse transform ($T^{-1}$); a quantization (Q) and inverse quantization ($Q^{-1}$); entropy encoding (E); a reference frame memory (RFM); inter prediction ($P_{inter}$); intra prediction ($P_{intra}$); mode selection (MS) and filtering (F). An example of a decoding process is illustrated in Figure 8. Figure 8 illustrates a predicted representation of an image block ($P'^n$); a reconstructed prediction error signal ($D'^n$); a preliminary reconstructed image ($I'^n$); a final reconstructed image ($R'^n$); an inverse transform ($T^{-1}$); an inverse quantization ($Q^{-1}$); an entropy decoding ($E^{-1}$); a reference frame memory (RFM); a prediction (either inter or intra) (P); and filtering (F).

The various embodiments may provide advantages. For example, the present embodiments enable independent decoding of some patches. The present embodiments also provides a viewport-dependent functionality and decoder speed-up. Further, the present embodiments define limitation criteria for each patch to be decoded and introduce dependencies between patches.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment. The computer program code comprises one or more operational characteristics. Said operational characteristics are being defined through configuration by said computer based on the type of said processor, wherein a system is connectable to said processor by a bus, wherein a programmable operational characteristic of the system according to an embodiment comprises at least the steps as defined by a flowchart of Figure 4 or Figure 5.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

**Claims**

1. A method for encoding, comprising

   - receiving a video presentation frame, where the video presentation represents a three-dimensional data;
   - generating one or more patches from the video presentation frame, wherein the patches represent different parts of the content of the video presentation frame;
   - determining which patch(es) of the generated one or more patches are encoded at least partly independently; and
   - encoding into a bitstream of a corresponding patch, being determined to be encoded at least partly independently, information on an independency of the patch.

2. A method for decoding, comprising

   - receiving an encoded bitstream;
   - for each patch of the encoded bitstream:

     • decoding from the encoded bitstream information on an independency of a patch;
     • decoding from the encoded bitstream the patch according to the information of the independency of the patch;

   - generating a video presentation frame from the decoded patch(es), wherein the patches represent different parts of the content of the video presentation frame.

3. An apparatus for encoding a bitstream, comprising:

   - means for receiving a video presentation frame, where the video presentation represents a three-dimensional data;
   - means for generating one or more patches from the video presentation frame, wherein the patches represent different parts of the content of the video presentation frame;
   - means for determining which patch(es) of the generated one or more patches are encoded at least partly independently; and
   - means for encoding into a bitstream of a corresponding patch, being determined to be encoded at least partly independently, information on an independency of the patch.

4. The apparatus according to claim 3, wherein the information on an independency of the patch comprises information on the type of the independency.

5. The apparatus according to claim 4, wherein the type of the independency is one or both of the following: spatial independency, temporal independency.

6. The apparatus according to claim 3, wherein information on an independency comprises information on the independency group the patch belongs to.

7. The apparatus according to any of the claims 3 to 6, comprising at least one processor, and memory including computer program code.

8. An apparatus for decoding a bitstream, comprising:

   - means for receiving an encoded bitstream;
   - for each patch of the encoded bitstream:

     • means for decoding from the encoded bitstream information on an independency of a patch;
     • means for decoding from the encoded bitstream the patch according to the information of the independency of the patch;

   - means for generating a video presentation frame from the decoded patch(es), wherein the patches represent different parts of the content of the video presentation frame.

9. The apparatus according to claim 8, wherein the information on an independency of the patch comprises information on the type of the independency.

10. The apparatus according to claim 9, wherein the type of the independency is one or both of the following: spatial independency, temporal independency.

11. The apparatus according to claim 9, wherein information on an independency comprises information on the independency group the patch belongs to.

12. The apparatus according to any of the claims 9 to 11, comprising at least one processor, and memory including computer program code.

13. An apparatus comprising at least one processor and a memory including computer program code, the memory and the computer program code configured to, with the at least one processor, cause the apparatus to perform at least the following:

- receive a video presentation frame, where the video presentation represents a three-dimensional data;
- generate one or more patches from the video presentation frame, wherein the patches represent different parts of the content of the video presentation frame;
- determine which patch(es) of the generated one or more patches are encoded at least partly independently; and
- encode into a bitstream of a corresponding patch, being determined to be encoded at least partly independently, information on an independency of the patch.

14. An apparatus comprising at least one processor and a memory including computer program code, the memory and the computer program code configured to, with the at least one processor, cause the apparatus to perform at least the following:

- receive an encoded bitstream;
- for each patch of the encoded bitstream:

  • decode from the encoded bitstream information on an independency of a patch;
  • decode from the encoded bitstream the patch according to the information of the independency of the patch;

- generate a video presentation frame from the decoded patch(es), wherein the patches represent different parts of the content of the video presentation frame.

Fig. 1

Fig. 2

Fig. 3

receiving a video presentation frame, where the video presentation represents a three-dimensional data

410

generating one or more patches from the video presentation frame, wherein the patches represent different parts of the content of the video presentation frame

420

determining which patch(es) of the generated one or more patches are encoded at least partly independently

430

encoding into a bitstream of a corresponding patch being determined to be encoded at least partly independently information on an independency of the patch

440

Fig. 4

| receiving an encoded bitstream |
| --- |

510

| for each patch of the encoded bitstream: decoding from the encoded bitstream information on an independency of a patch; and decoding from the encoded bitstream the patch according to the information of the independency of the patch |
| --- |

520

| generating a video presentation frame from the decoded patch(es), wherein the patches represent different parts of the content of the video presentation frame |
| --- |

530

# Fig. 5

Fig. 6

## Fig. 7

## Fig. 8

Europäisches
Patentamt

European
Patent Office

Office européen
des brevets

# EUROPEAN SEARCH REPORT

Application Number

EP 20 17 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "V-PCC Codec description", 125. MPEG MEETING; 20190114 - 20190118; MARRAKECH; (MOTION PICTURE EXPERT GROUP OR ISO/IEC JTC1/SC29/WG11), , no. n18190 13 March 2019 (2019-03-13), XP030212735, Retrieved from the Internet: URL:http://phenix.int-evry.fr/mpeg/doc_end_user/documents/125_Marrakech/wg11/w18190.zip N18190_VPCC_TMv5_AlgorithmDescription_v1.docx [retrieved on 2019-03-13] * page 3; figure 1 * ----- | 1-14 | INV. H04N19/597 H04N19/70 |
| X | SCHWARZ SEBASTIAN ET AL: "Emerging MPEG Standards for Point Cloud Compression", IEEE JOURNAL ON EMERGING AND SELECTED TOPICS IN CIRCUITS AND SYSTEMS, IEEE, PISCATAWAY, NJ, USA, vol. 9, no. 1, 1 March 2019 (2019-03-01), pages 133-148, XP011714044, ISSN: 2156-3357, DOI: 10.1109/JETCAS.2018.2885981 [retrieved on 2019-03-08] * figure 11 * ----- -/-- | 1-14 | TECHNICAL FIELDS SEARCHED (IPC) H04N |

The present search report has been drawn up for all claims

| Place of search | Date of completion of the search | Examiner |
|---|---|---|
| Munich | 16 September 2020 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 20 17 5117 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MERKLE P ET AL: "Efficient Prediction Structures for Multiview Video Coding", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 17, no. 11, 1 November 2007 (2007-11-01), pages 1461-1473, XP011195138, ISSN: 1051-8215, DOI: 10.1109/TCSVT.2007.903665 * abstract; figures 5-8 * ----- | 1-14 | |
| X | EP 3 465 622 A1 (MICROSOFT TECHNOLOGY LICENSING LLC [US]) 10 April 2019 (2019-04-10) * paragraph [0004]; figures 4, 14, 16 * ----- | 1-14 | |

TECHNICAL FIELDS SEARCHED (IPC)

The present search report has been drawn up for all claims

| Place of search | Date of completion of the search | Examiner |
|---|---|---|
| Munich | 16 September 2020 | Oelbaum, Tobias |

## ANNEX TO THE EUROPEAN SEARCH REPORT
## ON EUROPEAN PATENT APPLICATION NO.

EP 20 17 5117

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2020

| Patent document cited in search report | | Publication date | Patent family member(s) | | Publication date |
|---|---|---|---|---|---|
| EP 3465622 | A1 | 10-04-2019 | CN | 109196559 A | 11-01-2019 |
| | | | EP | 3465622 A1 | 10-04-2019 |
| | | | US | 2017347120 A1 | 30-11-2017 |
| | | | WO | 2017209961 A1 | 07-12-2017 |

EPO FORM P0459

For more details about this annex : see Official Journal of the European Patent Office, No. 12/82